# EUROPÄISCHE PATENTSCHRIFT

(11) **EP 1 090 969 B1**
(45) Veröffentlichungstag und Bekanntmachung des Hinweises auf die Patenterteilung: **26.02.2003**
(21) Anmeldenummer: 00117904.3
(22) Anmeldetag: 19.08.2000
(51) Int. Cl.: C09J 7/02

(54) **Klebeband**
Adhesive tape
Ruban adhésif

(30) Priorität: 01.10.1999 DE 29917320 U
(43) Veröffentlichungstag der Anmeldung: 11.04.2001
(73) Patentinhaber: Coroplast Fritz Müller GmbH & Co. KG, 42279 Wuppertal (DE)
(72) Erfinder: Lodde, Christoph Dipl.-Ing., 44225 Dortmund (DE)
(74) Vertreter: Patentanwälte Dr. Solf & Zapf

(56) Entgegenhaltungen:
- DD-A- 273 847
- US-A- 3 775 226
- US-A- 4 666 762
- US-A- 5 428 209

## Beschreibung

Die vorliegende Erfindung betrifft ein Klebeband, bestehend aus einem bandförmigen, als Aluminium-Polyester-Verbund ausgebildeten Träger mit einer Aluminiumfolie, einer auf dem Träger aufgebrachten Klebebeschichtung und einer auf dem Träger aufgebrachten Rückseitenbeschichtung, die aus einer Silikonabdeckschicht besteht.

Es sind Klebebänder aus der Bauindustrie bekannt, bei denen beispielsweise Verschlussklebebandtypen für die Schnittstellenverklebung von aluminiumkaschierten Dämmsystemen von Klimakanälen und Rohrleitungen eingesetzt werden. Im Wesentlichen werden die drei nachfolgend erläuterten Klebebandarten unterschieden.

Aluminiumklebebänder mit slikonisierter Abdeckfolie oder Abdeckpapier bestehen aus einem Träger aus 0,02 mm bis 0,1 mm dicker Aluminiumfolie und einer Abdeckung aus silikonisiertem Papier oder silikonisierter Polyolefinfolie. Als Klebstoffe werden druckempfindliche Haftklebestoffe auf Basis von Kautschuk, Synthesekautschuk oder Acrylat verwendet Derartige Klebebänder haben den Nachteil, dass bei der Verarbeitung das silikonisierte Abdeckpapier bzw. die silikonisierte Folie entfernt werden muss. Ausserdem können sie auf Grund der geringen Weiterreissfestigkeit nicht unter Zugspannung verarbeitet werden.

Aluminiumklebebänder mit einseitiger Silikonisierung (ohne Abdeckfolie oder -papier) bestehen aus einem 0,02 mm bis 0,05 mm dickem Aluminiumträger mit einer sogenannten "Easy Release" Rückseitenbeschichtung. Auch hier werden druckempfindliche Haftklebestoffe auf Basis von Kautschuk, Synthesekautschuk oder Acrylat verwendet. Diese Klebebänder haben den Nachteil, dass die "Easy Release" Silikonisierung eine Verklebung auf dem Bandrücken verhindert, Klebkräfte auf dem Bandrücken betragen ca. 0,5 N/cm. Auf Grund der geringen Weiterreissfestigkeit kann auch diese Klebeart nicht unter Zugspannung verarbeitet werden. Nachteile der geringen Klebekraft sind mögliche Teleskopiereffekte beim Aufwickeln bzw. bei der Herstellung. Diese treten insbesondere bei großen Mutterrollen auf, aus denen viele kleinere Rollen mittels Streifenschneider hergestellt werden sollen.

Aluminiumbedampfte PET- oder PP-Klebebänder weisen ebenfalls eine Klebeschicht aus druckempfindlichem Haftklebestoff auf Basis von Kautschuk, Synthesekautschuk oder Acrylat auf. Atuminiumbedampfte PP-Klebebänder weisen keine Abdeckung bzw. Rückseitenbeschichtung auf. Aluminiumbedampfte PET-Klebebänder dagegen nutzen zur Abdeckung silikonisiertes Papier oder silikonisierte Polyolefinfolie bzw. eine "Easy-Release"-Rückseitensilikonisierung. Diese Klebebänder haben allesamt den Nachteil, dass sie nicht diffusionsdicht sind. Des Weiteren können sie auf Grund ihrer Brennbarkeit nicht zum vorbeugenden Brandschutz eingesetzt werden.

Die US 4666762 zeigt und beschreibt ein Klebeband, das aus einem Aluminiumträger besteht, der als ein Aluminium-Polyester-Verbund ausgebildet ist. Dieses Klebeband ist zu Dekorations- und Reparaturzwecken sowie für Häuserdächer vorgesehen. Der Träger weist sowohl eine Klebe- als auch eine Rückseitenbeschichtung aus einer Silikonabdeckschicht mit einer Abdeckfolie auf. Durch die Abdeckfolie, die entfernt werden muss, wird die Handhabung im Vergleich zu abdeckfolienlosen Klebebändern verschlechtert. Dieses Klebeband ist ausserdem durch die relativ dicke Aluminiumfolie von 0,015 bis 0,05 mm wegen der Wickelbarkeit mit einem relativ hohen Herstellungsaufwand verbunden.

Durch die relativ dicke Aluminiumschicht kann es aber bei einem strukturierten Untergrund, der verklebt werden soll, nur zu einer punktuellen Verklebung kommen, was nachteilig ist.

Diese Aluminiumfolie kann zu Dekorationszwecken auch farbig sein.

Ein Klebeband mit einer Release-Silikonschicht ist in der US 3775226 offenbart, wobei dieses Klebeband eine aufgedampfte Aluminiumschicht aufweist.

Der vorliegenden Erfindung liegt die Aufgabe zu Grunde, ein Klebeband der eingangs beschriebenen Art derart zu verbessern, dass das Klebeband diffusionsdicht ist, eine hohe Weiterreissfestigkeit aufweist und den Anforderungen des Brandschutzes entspricht.

Erfindungsgemäß wird dies dadurch erreicht, dass die Rückseitenbeschichtung als ,,Controlled-Release«-Silikonisierung mit einer Klebekraft von 1,0 N/cm bis 3,0 N/cm ausgeführt ist und dass die Aluminiumfolie eine Aluminiumschichtdicke von 0,01 mm bis 0,012 mm aufweist. Dabei ist durch die Aluminiumfolie eine Wasserdampfdiffusionssperre gegeben, und die Polyesterfolie garantiert eine verbesserte Weiterreissfestigkeit, so dass das erfindungsgemäße Klebeband unter Zugspannung verklebt werden kann. Damit das Klebeband auch überlappend verklebt werden kann, ist eine Rückseitenbeschichtung in Form einer Silikonisierung vorgesehen. Durch die sogenannte "Controlled-Release"-Silikonisierung lassen sich Klebkräfte auf den Bandrücken von > 2,0 N/cm realisieren. Als Klebstoffe für die Vorderseite können Naturkautschukkleber, Synthesekautschukkleber und Acrylatkleber eingesetzt werden. Die Klebsstoffe sind allesamt und können, um den Anforderungen an den Brandschutz zu genügen, mit Flammschutzmitteln versehen werden.

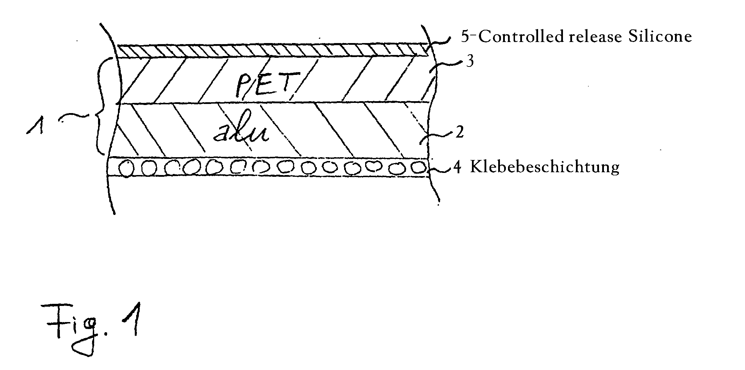

Weitere vorteilhafte Ausführungen der Erfindungen sind in den Unteransprüchen enthalten. An Hand der beiliegenden Zeichnung wird die Erfindung näher erläutert.

Ein erfindungsgemäßes Klebeband besteht aus einem Träger 1, bestehend aus einem Verbundmaterial aus Aluminium 2 und Polyester 3. Das Aluminiummaterial 2 wird mittels eines Kaschierklebers (PU-Dispersion) mit dem Polyestermaterial 3 verklebt. Auf der einen Seite der Trägerschicht ist eine Klebebeschichtung 4 aufgebracht; auf der gegenüberliegenden Seite befindet sich eine Rückseitenbeschichtung 5. Ein erfindungsgemäßes Klebeband für den Allgemeinbedarf weist eine Aluminiumschichtdicke von 0,012 mm auf. Die Schichtdicke der Polyesterschicht beträgt 0,012 mm. Vorzugsweise kann die Polyesterart Polyethylenterephthalat (PET) für das Verbundmaterial verwendet werden.

Als Klebebeschichtung 4 können druckempfindliche Klebstoffe, insbesondere Naturkautschuk-, Synthesekautschuk- und Acrylatkleber verwendet werden. Dabei weisen Klebebänder für den Allgemeinbedarf vorteilhafterweise eine 40 g/qm starke Klebebeschichtung aus Synthesekautschukkleber und Klebebänder für Hochtemperaturanwendungen eine ebenfalls 40 g/qm starke Klebebeschichtung aus Acrylatkleber auf.

Als ROckseitenbeschichtung 5 ist eine "Controlled Reiease"-Silikonisierung auf die Polyesterschicht 3 vorgesehen. Bei dem erfindungsgemäßen Klebeband, welches für den Allgemeinbedarf vorgesehen ist, wird durch diese spezielle Beschichtung eine "Release-Force" von 2,0 N/cm bis 3,0 N/cm und in der erfindungsgemäßen Ausführung des Klebebandes für Hochtemperaturanwendungen eine "Release-Force" von 1,0 N/cm bis 2,0 N/cm erreicht. Die "Release-Force" gibt die Kraft an, die zum Lösen des Klebebandes von einem Substrat aufgewendet werden muss (vgl. DIN EN 1939 und FINAT 10).

Die erfindungsgemäße Ausbildung des Klebebandes ermöglichst es, dass aus dem Klebeband eine Klebebandrolle durch spiralförmiges Aufwickeln gebildet werden kann. In dieser aufgewickelten Form kann das erfindungsgemäße Klebeband gelagert werden. Die erfindungsgemäße Ausgestaltung des Klebebandes ermöglicht ein problemloses Abwickeln des Klebebandes, ohne dass hierdurch die Eigenschaften des Klebebandes beeinträchtigt werden.

## Patentansprüche

1. Klebeband, bestehend aus einem bandförmigen, als Aluminium-Polyester-Verbund ausgebildeten Träger (1) mit einer Aluminiumfolie, einer auf dem Träger aufgebrachten Klebebeschichtung (4) und einer auf dem Träger aufgebrachten Rückseitenbeschichtung (5), die aus einer Silikonabdeckschicht besteht,
**dadurch gekennzeichnet, dass** die Rückseitenbeschichtung (5) als "Controlled-Release"-Silikonisierung mit einer Klebekraft von 1,0 N/cm bis 3,0 N/cm ausgeführt ist und dass die Aluminiumfolie eine Aluminiumschichtdicke (2) vom 0,01 mm bis 0,012 mm aufweist.

2. Klebeband nach Anspruch 1,
**dadurch gekennzeichnet, dass** als Polyesterart Polyethylenterephthalat (PET) verwendet wird.

3. Klebeband nach Anspruch 1,
**dadurch gekennzeichnet, dass** die Klebebeschichtung (4) aus einem druckempfindlichen Haftkleber besteht.

4. Klebeband nach Anspruch 1 oder 3,
**dadurch gekennzeichnet, dass** die Klebebeschichtung (4) aus Naturkautschukkleber besteht.

5. Klebeband nach Anspruch 1 oder 3,
**dadurch gekennzeichnet, dass** die Klebebeschichtung (4) aus Synthesekautschukkleber besteht.

6. Klebeband nach Anspruch 1 oder 3,
**dadurch gekennzeichnet, dass** die Klebebeschichtung (4) aus Acrylatkleber besteht.

7. Klebeband nach einem der Ansprüche 1 bis 6,
**dadurch gekennzeichnet, dass** die Klebebeschichtung (4) mit Flammschutzmitteln versehen ist.

8. Klebeband nach einem der Ansprüche 1 bis 7,
**dadurch gekennzeichnet, dass** die Polyesterschicht eine Schichtdicke von 0,012 mm aufweist.

9. Klebeband nach einem der Ansprüche 1 bis 8,
**dadurch gekennzeichnet, dass** die Klebebeschichtung (4) ein Beschichtungsgewicht von 40 g/cm besitzt.

10. Klebebandrolle bestehend aus einem spiralförmig aufgewickeltem Klebeband nach den Ansprüchen 1 bis 9.

## Claims

1. Adhesive tape composed of a tape-like carrier (1) in the form of an aluminium/polyester composite and comprising an aluminium foil, of an adhesive coating (4) applied to the carrier and of a reverse-face coating (5) which is applied to the carrier and is composed of a silicone liner layer, **characterized in that** the reverse-phase coating (5) is configured in the form of controlled-release siliconization with a bond strength of from 1.0 N/cm to 3.0 N/cm and **in that** the aluminium foil has an aluminium layer thickness (2) of from 0.01 mm to 0.012 mm.

2. Adhesive tape according to Claim 1, **characterized in that** the type of polyester used is polyethylene terephthalate (PET).

3. Adhesive tape according to Claim 1, **characterized in that** the adhesive coating (4) is composed of a pressure-sensitive adhesive.

4. Adhesive tape according to Claim 1 or 3, **characterized in that** the adhesive coating (4) is composed of natural rubber adhesive.

5. Adhesive tape according to Claim 1 or 3, **characterized in that** the adhesive coating (4) is composed of synthetic rubber adhesive.

6. Adhesive tape according to Claim 1 or 3, **characterized in that** the adhesive coating (4) is composed of acrylate adhesive.

7. Adhesive tape according to one of Claims 1 to 6, **characterized in that** the adhesive coating (4) is provided with flame retardants.

8. Adhesive tape according to one of Claims 1 to 7, **characterized in that** the polyester layer has a thickness of 0.012 mm.

9. Adhesive tape according to one of Claims 1 to 8, **characterized in that** the adhesive coating (4) possesses a coating weight of 40 g/m².

10. Adhesive tape roll composed of a spirally wound adhesive tape according to Claims 1 to 9.

## Revendications

1. Ruban adhésif, constitué d'un support (1) en forme de ruban, configuré sous forme d'un composite aluminium-polyester, avec une feuille d'aluminium, un revêtement adhésif (4) appliqué sur le support, et un revêtement dorsal (5), appliqué sur le support et qui est constitué d'une couche de protection siliconée, **caractérisé en ce que** le revêtement dorsal (5) est configuré comme une siliconisation "Controlled release" (à libération contrôlée) ayant une force d'adhérence de 1,0 à 3,0 N/cm, et **en ce que** la feuille d'aluminium présente une épaisseur (2) de feuille d'aluminium de 0,01 à 0,012 mm.

2. Ruban adhésif selon la revendication 1, **caractérisé en ce qu'**on utilise en tant que type de polyester du poly(téréphtalate d'éthylène) (PET)

3. Ruban adhésif selon la revendication 1, caractérisé en ce le revêtement adhésif (4) est constitué d'un adhésif de contact sensible à la pression.

4. Ruban adhésif selon la revendication 1 ou 3, **caractérisé en ce** le revêtement adhésif (4) est constitué d'un adhésif à base de caoutchouc naturel.

5. Ruban adhésif selon la revendication 1 ou 3, **caractérisé en ce** le revêtement adhésif (4) est constitué d'un adhésif à base de caoutchouc de synthèse.

6. Ruban adhésif selon la revendication 1 ou 3, **caractérisé en ce** le revêtement adhésif (4) est constitué d'un adhésif à base d'un acrylate.

7. Ruban adhésif selon l'une des revendications 1 à 6, **caractérisé en ce** le revêtement adhésif (4) est pourvu d'agents d'ignifugation.

8. Ruban adhésif selon l'une des revendications 1 à 7, **caractérisé en ce que** la couche de polyester a une épaisseur de couche de 0,012 mm.

9. Ruban adhésif selon l'une des revendications 1 à 8, **caractérisé en ce** le revêtement adhésif (4) a une masse de revêtement de 40 g/m².

10. Rouleau de ruban adhésif constitué d'un ruban adhésif enroulé en spirale selon les revendications 1 à 9.
